# EUROPEAN PATENT APPLICATION

(11) **EP 2 426 086 A1**
(43) Date of publication of application: **07.03.2012**
(21) Application number: 10769641.1
(22) Date of filing: 19.04.2010
(51) Int. Cl.: C01B 33/037, C01B 33/02

(54) **METHOD FOR CLEANING SILICON SLUDGE**

(30) Priority: 28.04.2009 JP 2009109694
(71) Applicant: SUMCO Corporation, Minato-ku Tokyo 105-8634 (JP)
(72) Inventor: OKITA Kenji, Tokyo 105-8634 (JP)
(74) Representative: Adam, Holger
(86) International application number: PCT/JP2010/056953
(87) International publication number: WO 2010/125942

(57) **Abstract**

After removing organic matters and forming a silicon oxide film by ozone-oxidizing a silicon powder in silicon sludge, the ozone is removed and the resulting sludge is dispersed into hydrochloric acid for dissolving metal impurities thereinto. Then, the supernatant liquid of the hydrochloric acid is removed, and the silicon oxide film is dissolved with hydrofluoric acid after being rinsed with ultrapure water, so that the metal impurities in the surface layer of the silicon powder are removed.

## Description

### Technical Field

The present invention relates to a method for cleaning silicon sludge, specifically, a method for cleaning silicon sludge capable of cleaning silicon sludge produced through a silicon working process and collecting high-purity silicon powder.

### Background Art

A silicon wafer as a substrate for forming ultrahigh integrated devices such as ULSIs is manufactured by applying wafer processing to a single crystal silicon ingot pulled up by the Czochralski (CZ) process. In detail, a single crystal silicon ingot is cut into blocks, and thereafter, cylindrical grinding using a grinding wheel and slicing using a wire saw are applied to obtain a large number of silicon wafers. Then, each silicon wafer is chamfered, lapped, etched, and ground to produce a device-forming product wafer.

In the wafer working process, in the cylindrical grinding process and the slicing process, a large amount of silicon sludge including silicon powder as machining chips (silicon waste) is produced. A large amount of silicon sludge is also produced in a back grinding process at a device manufacturer. In this silicon sludge, in addition to high-purity silicon powder, impurities, for example, alumina, silica, corundum, Cu, Fe, C, barium oxide, and magnesium oxide, etc., produced by abrasion of organics and the grinding wheel are mixed. Therefore, metal impurities such as Cu and Fe, etc., adhere to the surfaces of the silicon powder. Further, also in the silicon oxide films formed on the surface layers of the silicon powder, metal impurities are diffused internally.

There is a known conventional technique to remove metal impurities adhering to the surfaces of silicon powder and metal impurities inside the silicon oxide films on the surface layers by acid cleaning (for example, refer to Patent Document 1). In Patent Document 1, a predetermined amount of mixed solution of sulfuric acid and hydrofluoric acid is supplied into a cleaning tank into which silicon sludge is poured. Accordingly, metal impurities adhering to the surfaces of silicon powder are dissolved by sulfuric acid, and silicon oxide films are dissolved by hydrofluoric acid, and metal impurities in the surface layers that flowed out to the mixed solution according to this dissolution are dissolved by sulfuric acid. Accordingly, the purity of silicon increases.

Patent Document 1: Japanese Published Unexamined Patent Application No. 2001-278612

### Disclosure of the Invention

### Problem to be Solved by the Invention

However, silicon sludge discharged through the wafer working process contains a large amount of organics in addition to metal impurities, and the organics contaminate silicon powder.
On the surface layers of silicon powder, silicon oxide films are formed by, for example, heat generated during cylindrical grinding and reaction with cutting water. Here, the silicon oxide films are formed only at the shallow portions (approximately 0.5 nm) of the surface layers of the silicon powder, and it was impossible to remove metal impurities at deeper portions of the surface layers even by cleaning with hydrofluoric acid.

Thus, as a result of intensive research, the inventor of the present invention has found that all the above-described problems could be solved by applying, in order, the following steps to silicon sludge produced through a silicon working process, andasaresult, high-purity silicon could be collected. The steps are an ozone oxidation step capable of removing organics on the surfaces of silicon powder by ozone oxidation and forming silicon oxide films up to deeper portions of the surface layers of silicon powder, an ozone removal step of decomposing ozone by adding a proper amount of hydrogen peroxide water, a hydrochloric acid cleaning step of dissolving metal impurities adhering to the surfaces of silicon powder with hydrochloric acid, a sedimentation separation step of separating silicon sludge dispersed in hydrochloric acid into a supernatant and silicon sludge by leaving the silicon sludge for a predetermined time, a supernatant removal step of removing a supernatant in which metal impurities are dissolved, and a hydrofluoric acid cleaning step in which the silicon oxide films on the surface layers of the silicon powder are dissolved by hydrofluoric acid, metal impurities dispersed in the silicon oxide films are mixed into hydrofluoric acid, and mousse-like silicon is formed by floating the silicon powder by a gas (for example, a H₂SiF₆ gas) produced during hydrofluoric acid cleaning or bubbling, etc.

An object of the present invention is to provide a method for cleaning silicon sludge capable of reducing the levels of contamination with organics and impurities on the surfaces of silicon powder, removing silicon oxide films formed on the surface layers of the silicon powder, and reducing the amount of metal impurities included in the surface layers, and accordingly collecting high-purity silicon.

### Means for Solving the Problem

The present invention provides a method for cleaning silicon sludge in which silicon sludge including silicon powder produced through a silicon working process and a dissolved ozone solution are poured into a container, and by ozone-oxidizing the silicon sludge by ozone in the dissolved ozone solution, organics on the surfaces of the silicon powder are removed, silicon oxide films are formed on the surface layers of the silicon powder, ozone removal is applied to decompose ozone in the ozone-oxidized silicon sludge, and after the ozone removal, hydrochloric acid that dissolves metal impurities adhering to the surfaces of the silicon powder is poured into the container, and by dispersing the silicon sludge into the hydrochloric acid, the silicon sludge is cleaned with hydrochloric acid, and after the hydrochloric acid cleaning, the silicon sludge dispersed in the hydrochloric acid is left to stand in the container and separated by sedimentation into a supernatant and silicon sludge, and thereafter, the supernatant in which the metal impurities are dissolved is removed from the container, and after the removal of the supernatant, by pouring ultrapure water into the container, ultrapure water rinsing is applied to rinse the sedimented silicon sludge with ultrapure water, and after the ultrapure water rinsing, by pouring hydrofluoric acid into the container, hydrofluoric acid cleaning is applied to dissolve the silicon oxide films of the silicon powder by the hydrofluoric acid to discharge the metal impurities taken in the silicon oxide films into the hydrofluoric acid.

According to the present invention, silicon sludge produced through a silicon working process is ozone-oxidized in a container. As a result, organics on the surfaces of silicon powder are removed by ozone with high oxidation power in the dissolved ozone solution, and on the surface layers of the silicon powder, silicon oxide films are formed uniformly. Removal of organics by ozone occurs when the carbon chain is cut by the oxidation effect of ozone and the molecular weight is reduced. Thereafter, a proper amount of hydrogen peroxide water is added to the silicon sludge to reduce ozone. Then, the silicon sludge is dispersed in hydrochloric acid to dissolve metal impurities adhering to the surfaces of the silicon powder.

Next, hydrochloric acid in which silicon sludge is dispersed is left to stand in the container and separated by sedimentation into a supernatant and silicon sludge. Then, the supernatant in which metal impurities are dissolved is removed, and the sedimented silicon sludge is rinsed with ultrapure water. Rinsing is performed until the ultrapure water added to the silicon sludge reaches pH 4 to 6. If the pH becomes higher than this range, the zeta potential becomes close to zero, the attraction between particles is reduced and cohesion decreases, so that the sedimentation effect is reduced. After rinsing, silicon oxide films on the surface layers of the silicon powder are dissolved by hydrofluoric acid, and metal impurities diffused in the surface layers are discharged into hydrofluoric acid. Accordingly, the level of contamination with organics and the level of contamination with impurities on the surfaces of the silicon powder are reduced, the silicon oxide films formed on the surface layers of the silicon powder can be removed, and the amount of metal impurities in the surface layers can be reduced. As a result, high-purity silicon can be collected.

The silicon working process through which silicon sludge is produced is, for example, a block cutting process to be applied to a single crystal silicon ingot, a cylindrical grindingprocess to be applied to a silicon block by using a grinding wheel, an orientation flat process or a notch process to be applied to a silicon block by using a grinding wheel, a slicing process to be applied to a silicon block by using a wire saw, a silicon wafer chamfering process, a silicon wafer lapping process, a silicon wafer grinding process, or the like. In addition, silicon sludge produced through a back grinding process at a device manufacturer is also included. As a single crystal silicon ingot, an ingot pulled up by the Czochralski (CZ) process and an ingot that grew according to the floating-zone (FZ) method can be adopted.

Silicon sludge is muddy settling of silicon powder and impurities. However, silicon sludge mentioned herein includes not only sludge including silicon powder but also powder of dried (or water-containing) silicon. The silicon concentration in silicon sludge produced through a silicon working process is approximately 1,000 ppm.
The range of the particle diameter of silicon powder is, for example, 0.005 to 50 µm.

In silicon sludge produced through a silicon working process, in addition to high-purity silicon powder, impurities such as alumina, silica, corundum, Cu, Fe, C, barium oxide, and magnesium oxide produced by abrasion of a grinding wheel, etc., may be mixed.

Ozone is supplied in the form of a dissolved ozone solution obtained by dissolving ozone in ultrapure water into silicon sludge. As ultrapure water, water with an impurity content of, for example, not more than 0.01 µg/liter can be adopted. When dissolving ozone, it is desirable that the ozone concentration is controlled by bubbling into a tank or directly installing a dissolution module in a treatment tank.
The working temperature of the dissolved ozone solution is 5 to 30°C. The ozone concentration is 5 to 30 ppm. If the ozone concentration is less than 5 ppm, oxidation becomes insufficient in the surface layers of the silicon powder. If the ozone concentration is more than 30 ppm, the amount of hydrogen peroxide water used to remove ozone increases. A preferred ozone concentration is 15 to 25 ppm.

The thickness of the silicon oxide films to be formed on the surface layers of silicon powder by ozone oxidation must be not less than the thickness of a region including metal impurities diffused internally from the surfaces of silicon powder. The thickness of the silicon oxide films is 1 to 5 nm. If the thickness is less than 1 nm, metal impurities diffused internally from the surfaces of the silicon powder cannot be sufficiently taken in the silicon oxide films, and the amount of metal impurities that cannot be removed from the silicon powder increases. If the thickness is more than 5 nm, when the silicon oxide films are dissolved by hydrofluoric acid by hydrofluoric acid cleaning, fine silicon powder with particle sizes not more than 10 nm in the silicon powder disappears. A preferred thickness of silicon oxide films is 2 to 4 nm. Most of the metal impurities diffused internally from the surfaces of silicon powder are present at positions of 2 to 4 nm from the surfaces. Therefore, in this range, silicon oxide films into which metal impurities are taken can be reliably removed, and a preferred effect is further obtained in which the dissolution amount of silicon neighboring the silicon oxide films in the silicon powder is also reduced. If etching on the micrometer order is applied to the silicon powder, the silicon powder collection rate decreases, and a large amount of etching solution is consumed.

As an ozone removal method, as well as addition of hydrogen peroxide water, heating, ultraviolet ray irradiation, addition of an alkaline substance, and leaving in a natural condition, etc., can also be adopted. Hydrogen peroxide water contains 0.1 to 5 weight % of hydrogen peroxide dissolved in ultrapure water. If hydrogen peroxide is less than 0.1 weight %, the processing time becomes long. If hydrogen peroxide is more than 5 weight %, the stability of the concentration control is deteriorated, and the cost is increased. A preferred amount of dissolution of hydrogen peroxide in ultrapure water is 0.5 to 1.0 weight %. In this range, the stability of the concentration control increases. The working temperature of hydrogen peroxide water is 15 to 30°C. Decomposition of ozone by hydrogen peroxide water is expressed by the following formula:

O₃ + H₂O₂ → 2O₂ + H₂O

Hydrochloric acid contains 0.035 to 10 weight % of hydrogen chloride dissolved in ultrapure water. If hydrogen chloride is less than 0.035 weight %, impurity dissolution becomes insufficient. If hydrogen chloride is more than 10 weight %, the amount of the chemical used increases. The chemical concentration is fluctuated depending on impurities of the input material.
Metal impurities to be dissolved by hydrochloric acid are Cu, Fe, Cr, Ni, Na, and Al, etc.

"Dispersion" mentioned herein means a state where silicon powder in silicon sludge floats or is suspended at a uniform concentration in hydrochloric acid.
Sedimentation separation of silicon sludge from hydrochloric acid is performed by leaving hydrochloric acid in which silicon sludge is dispersed to stand for 1 to 4 hours. If the static leaving time is less than 1 hour, sedimentation becomes insufficient. If the static leaving time is more than 4 hours, the throughput is reduced. The supernatant of ultrapure water after being left to stand contains impurities, for example, Fe and Cu, etc.

The temperature of ultrapure water to be used for rinsing is 15 to 30°C.
Hydrofluoric acid contains 0.5 to 5 weight % of hydrogen fluoride dissolved in ultrapure water. If hydrogen fluoride is less than 0.5 weight %, removal of natural oxide films becomes uneven. If hydrogen fluoride is more than 5 weight %, the amount of the chemical used increases. As well as 100% hydrofluoric acid, hydrofluoric acid to which a predetermined proportion of hydrochloric acid is added may also be adopted.
"Metal impurities diffused in the surface layers are discharged into hydrofluoric acid" mentioned herein means a state where metal impurities that adhered to the surfaces of silicon powder and are then diffused internally in the surface layers float or are suspended in hydrofluoric acid according to dissolution of silicon oxide films into hydrofluoric acid.
The above-described steps of ozone oxidation, ozone removal, hydrochloric acid cleaning,sedimentation separation, supernatant removal, pure water rinsing, and hydrofluoric acid cleaning may be repeated a predetermined number of times in the above-described order.

Thereafter, the collected silicon powder is dried and used as a silicon-based solar cell material, etc.
The silicon-based solar cell material mentioned herein is any of a material of a single crystal silicon-based solar cell, a material of a polycrystal silicon-based solar cell, and a material of an amorphous silicon-based solar cell. The silicon-based solar cell material becomes an ingot by melting and cooling in a crucible, and this is wafer-processed, and becomes a silicon-based solar cell by formation of p-n junction according to a predetermined method.
After hydrofluoric acid cleaning, silicon sludge is rinsed with ultrapure water in which hydrogen is mixed, or heated to vaporize hydrofluoric acid components.

In the present invention, more preferably, after the hydrofluoric acid cleaning, ultrapure water in which hydrogen is mixed is poured into the container, hydrogen water rinsing is applied to rinse the silicon sludge with the ultrapure water in which hydrogen is mixed, and after the hydrogen water rinsing, a dissolved ozone solution is poured into the container, the silicon sludge is ozone-oxidized again to form silicon oxide films on the surface layers of the silicon powder, and thereafter, by pouring hydrogen peroxide water into the container, ozone in the ozone-oxidized silicon sludge is removed again, and then, hydrofluoric acid is poured into the container, and by cleaning the silicon oxide films of the silicon powder with hydrofluoric acid again, metal impurities taken in the silicon oxide films are discharged into the hydrofluoric acid.

In this case, after the above-described hydrofluoric acid cleaning, first, silicon sludge is rinsed with ultrapure water in which hydrogen for suppressing oxidation of silicon is mixed, and then, the silicon sludge is ozone-oxidized again to form silicon oxide films on the surface layers of the silicon powder. Then, hydrogen peroxide water is added again to the ozone-oxidized silicon sludge to remove ozone, and thereafter, the silicon oxide films are cleaned with hydrofluoric acid again. Accordingly, metal impurities diffused to the deeper portions of the surface layers of the silicon powder can also be removed, and higher-purity silicon can be collected.

Ultrapure water (hydrogen water) in which hydrogen is mixed is ultrapure water in which hydrogen is dissolved. The amount of dissolution of hydrogen is 1 to 5 ppm. If the amount is less than 1 ppm, silicon sludge is oxidized. Even if the amount is more than 5 ppm, the effect of suppressing oxidation of silicon sludge does not increase any more.
These steps of ultrapure water rinsing, ozone re-oxidation, ozone re-removal, and hydrofluoric acid re-cleaning may be repeated a predetermined number of times in the above-described order. Hydrochloric acid may be added to hydrofluoric acid.

### Effect of the Invention

According to the present invention, by pouring silicon sludge discharged through a silicon working process and a dissolved ozone solution into a container, the silicon sludge is ozone-oxidized and organics on the surfaces of silicon powder are removed, and thick silicon oxide films are formed on the surface layers of silicon powder. Thereafter, ozone is removed by adding hydrogen peroxide water to the silicon sludge, the silicon sludge is dispersed in hydrochloric acid, and metal impurities adhering to the surfaces of silicon powder are dissolved. Next, hydrochloric acid in which silicon sludge is dispersed is left to stand in the container, a supernatant in which metal impurities are dissolved is removed, and the sedimented silicon sludge is rinsed with ultrapure water. After rinsing, the silicon oxide films on the surface layers of the silicon powder are dissolved by hydrofluoric acid, and metal impurities diffused in the surface layers are discharged into hydrofluoric acid. Accordingly, the level of contamination with organics and the level of contamination with impurities on the surfaces of the silicon powder are reduced, the silicon oxide films formed on the surface layers of the silicon powder can be removed and the amount of metal impurities in the surface layers can be reduced, and as a result, high-purity silicon can be collected.

According to the present invention, preferably, after the above-described hydrofluoric acid cleaning, first, silicon sludge is rinsed with ultrapure water in which hydrogen for suppressing oxidation of silicon is mixed, and then, the silicon sludge is ozone-oxidized again to form silicon oxide films on the surface layers of the silicon powder, and next, hydrogen peroxide water is added again to the ozone-oxidized silicon sludge to remove ozone, and then, the silicon oxide films are cleaned with hydrofluoric acid again. Accordingly, metal impurities diffused to the deeper portions of the surface layers of the silicon powder can be removed while high-purity silicon can be obtained.

### Brief Description of the Drawings

Fig. 1 is a flow sheet showing a method for cleaning silicon sludge according to Example 1 of the present invention.
Fig. 2 is a flow sheet continued from the flow sheet of Fig. 1.

### Best Mode for Carrying Out the Invention

Hereinafter, an example of the present invention will be described in detail.

### Example 1

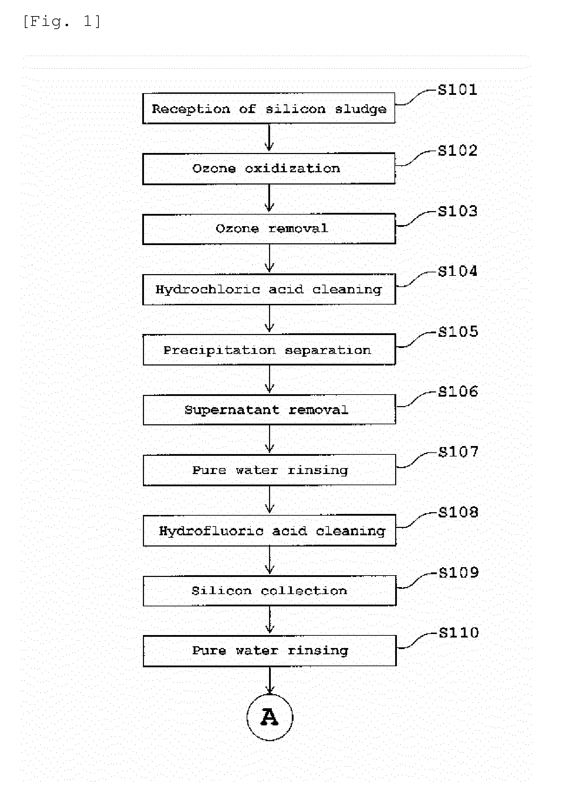

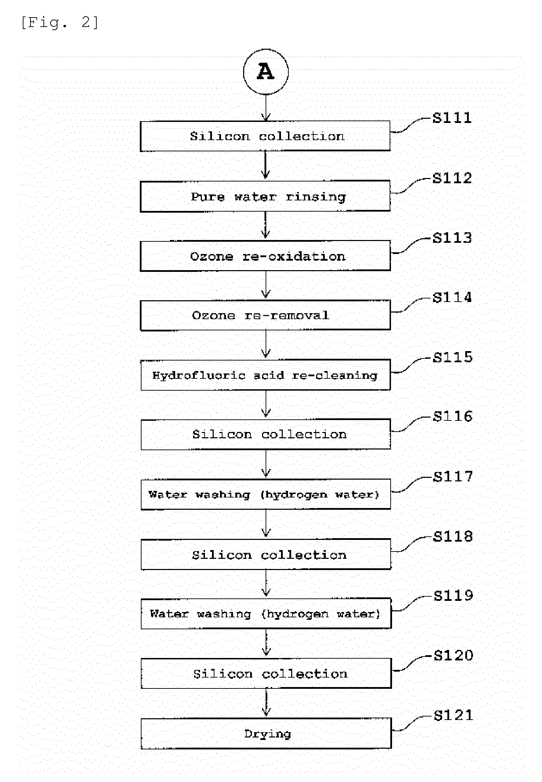

With reference to the flow sheets of Fig. 1 and Fig. 2, a method for cleaning silicon sludge according to Example 1 of the present invention will be described. Here, a method for cleaning silicon sludge discharged through a cylindrical grinding process to be applied to a silicon block of a single crystal silicon ingot for silicon wafers with a diameter of 300 mmwill be described by way of example. The present invention is also applicable as a method for cleaning silicon sludge produced through a back grinding process at a device manufacturer.
As shown in the flow sheets of Fig. 1 and Fig. 2, the method for cleaning silicon sludge according to Example 1 of the present invention includes a silicon sludge receiving step S101, an ozone oxidation step S102, an ozone removal step S103, a hydrochloric acid cleaning step S104, a sedimentation separation step S105, a supernatant removal step S106, a pure water rinsing step S107, a hydrofluoric acid cleaning step S108, a silicon collection step S109, a pure water rinsing step S110, a silicon collection step S111, a pure water rinsing step S112, an ozone re-oxidation step S113, an ozone re-removal step S114, a hydrofluoric acid re-cleaning step S115, a silicon collection step S116, a water (hydrogen water) washing step S117, a silicon collection step S118, a water (hydrogen water) washing step S119, a silicon collection step S120, and a drying step S121.

A single crystal silicon ingot with a diameter of 306 mm, a specific resistance of 10 mΩ·cm, and an initial oxygen concentration of 1.0×10¹⁸ atoms/cm³ is pulled up by the Czochralski (CZ) process.
Next, the single crystal silicon ingot is clamped in the longitudinal direction, and then, the outer peripheral portion of the silicon block is ground by 5 mm and formed into a columnar shape by a cylindrical grinder using a resinoid grinding wheel containing abrasive grains (SiC) of #50 to #250 as a grinding tool while supplying cutting water of ultrapure water at 5 to 50 liter/min. At this time, a large amount of silicon sludge is produced.

In the silicon sludge receiving step S101, this silicon sludge is received. Silicon sludge is muddy settling including silicon powder within a particle diameter range of 0.1 to 50 µm and impurities. Impurities (including heavy metals) are alumina, silica, corundum, Cu, Fe, C, etc., produced by abrasion of the grinding wheel, etc. Among these, the content of Cu is 1 to 10 ppm, and the content of Fe is 5 to 30 ppm.

Next, the ozone oxidation step S102 will be described. Here, 5kg of silicon sludge is poured into a sedimentation container storing 50 liters of a dissolved ozone solution (water temperature: 20°C) containing ozone dissolved at a concentration of 25 ppm in ultrapure water, and held for 10 minutes. Accordingly, organics on the surfaces of silicon powder are removed by ozone with high oxidation power, and on the entire surface layers of the silicon powder, thick silicon oxide films of 0.5 to 1 nm are formed uniformly. At this time, metal impurities diffused in the surface layers of the silicon powder are taken in the silicon oxide films. Organics are removed by ozone when the carbon chain is cut by the oxidation effect of ozone and the molecular weight is reduced. The thicknesses of the silicon oxide films can be adjusted to be within the range of 1 to 5 nm by repeating the steps of the ozone oxidation step S102 through the hydrofluoric acid cleaning step S108 in Fig. 1 a predetermined number of times.

In the ozone removal step S103, into this sedimentation container, hydrogen peroxide water (water temperature: 25°C) containing hydrogen peroxide dissolved at a concentration of 1 weight % in ultrapure water is poured by an amount necessary for decomposition of remaining ozone (until the ozone concentration becomes not more than 3 ppm), and held for 5 minutes. Accordingly, ozone is reduced and decomposed into oxygen and water.
In the hydrochloric acid cleaning step S104, into the sedimentation container, 50 liters of hydrochloric acid (water temperature: 25°C) containing 5 weight % of hydrogen chloride dissolved in ultrapure water is supplied to dissolve and remove metal impurities including Cu, Fe, etc., adhering to the surfaces of the silicon powder. The supply amount of hydrochloric acid is set so that the water content in silicon sludge after hydrochloric acid is poured becomes 1000%. The water content is set to 1000%, so that a supernatant is produced during sedimentation separation described later.

In the sedimentation separation step S105, ultrapure water into which silicon sludge is poured is stirred by a stirring apparatus by using a circulation pump of 20 liter/min to disperse silicon sludge in hydrochloric acid. Then, after leaving to stand for 3 hours, the silicon sludge dispersed in hydrochloric acid is separated by sedimentation into a supernatant and silicon sludge.
In the supernatant removal step S106, the supernatant in the sedimentation container is suctioned and discharged by a discharge pump. In the supernatant, impurities (dust, etc.) with small specific gravities in the silicon sludge dispersed in ultrapure water are dissolved or float, and these are removed. As a result, at the bottom of the sedimentation container, silicon sludge with reduced impurities remains. However, the content of Cu and the content of Fe as metal impurities in the silicon sludge are not greatly different from those before dispersion into ultrapure water.

In the pure water rinsing step S107, 50 liters of ultrapure water (water temperature: 25°C) is supplied into the sedimentation container to rinse silicon sludge for 10 minutes.
In the hydrofluoric acid cleaning step S108, 50 liters of hydrofluoric acid (water temperature: 25°C) containing 1.0 weight % of hydrogen fluoride dissolved in ultrapure water is supplied into the sedimentation container and held for 10 minutes to dissolve the silicon oxide films formed on the surface layers of the silicon powder. Accordingly, metal impurities such as Cu and Fe, etc., taken in the silicon oxide films are discharged into hydrofluoric acid. The silicon surfaces are water-repellent, so that the silicon powder floats due to a reactive gas (H₂SiF₆ gas) produced from the silicon powder during hydrofluoric acid cleaning. At this time, bubbling with a micro-bubble size is performed inside the sedimentation container. Accordingly, the siliconpowder is forcibly floated, and mousse-like objects including the silicon powder appear.

In the silicon collection step S109, the mousse-like objects including silicon powder floating to the liquid surface are collected by a scraper and poured into a pure water rinsing tank.
In the pure water rinsing step S110, 50 liters of hydrogen water (water temperature: 25°C) is supplied into the pure water rinsing tank, and hydrofluoric acid components adhering to the silicon powder are rinsed for 10 minutes. Hydrogen water contains 5 ppm of hydrogen dissolved in ultrapure water, and suppressesoxidationofsilicon. During this rinsing, stirring is performed by a stirring apparatus under stirring conditions of a circulation pump of 20 liter/min to increase the rinsing effect. After rinsing, bubbling is performed under the above-described conditions to produce mousse-like objects again.
In the silicon collection step S111, mousse-like objects floating to the liquid surface are collected by a scraper and poured into another pure water rinsing tank.

In the pure water rinsing step S112, in the other pure water rinsing tank, hydrofluoric acid components adhering to silicon powder are rinsed as in the pure water rinsing step S110, and the rinse agent is stirred and bubbled to produce mousse-like objects.
In the ozone re-oxidation step S113, under the same conditions as in the ozone oxidation step S102, 50 liters of dissolved ozone solution (water temperature: 20°C) is supplied into the sedimentation container and held for 10 minutes. Accordingly, thick silicon oxide films of 0.5 to 1 nm are formed uniformly on the entire surface layers of silicon powder by ozone. The thicknesses of the silicon oxide films can be adjusted to fall within the range of 1 to 5 nm by repeating the steps of the ozone re-oxidation step S113 through the hydrofluoric acid re-cleaning step S115 in Fig. 2 a predetermined number of times.

In the ozone re-removal step S114, under the same conditions as in the ozone removal step S103, hydrogen peroxide water is supplied into the sedimentation container, and held for 5 minutes. Accordingly, ozone is decomposed.
In the hydrofluoric acid re-cleaning step S115, under the same conditions as in the hydrofluoric acid cleaning step S108, silicon powder is cleaned with hydrofluoric acid, and silicon oxide films formed on the surface layers of the silicon powder are dissolved. Accordingly, metal impurities such as Cu and Fe, etc., taken in the silicon oxide films are discharged into hydrofluoric acid. Here, bubbling is performed inside the sedimentation container under the same conditions as in the hydrofluoric acid cleaning step S108 to produce mousse-like objects including silicon powder on the liquid surface of hydrofluoric acid.

In the silicon collection step S116, as in the silicon collection step S109, mousse-like objects including silicon powder floating to the liquid surface are collected and poured into a water-washing tank.
In the water-washing step S117, as in the pure water rinsing step S110, hydrogen water is supplied into the water-washing tank, and hydrofluoric acid components adhering to the silicon powder are rinsed while oxidation of silicon is suppressed and stirring is performed by a stirring apparatus. After rinsing, bubbling is performed to produce mousse-like objects again.
In the silicon collection step S118, as in the silicon collection step S109, mousse-like objects including silicon powder floating to the liquid surface are collected and poured into another water-washing tank.
In the water-washing step S119, as in the pure water rinsing step S110, hydrogen water is supplied into the water-washing tank, and hydrofluoric acid components adhering to the silicon powder are rinsed while oxidation of silicon is suppressed and stirring is performed by a stirring apparatus. After rinsing, bubbling is performed to produce mousse-like objects again.

In the silicon collection step S120, as in the silicon collection step S109, mousse-like objects including silicon powder floating to the liquid surface are collected.
In the drying step S121, the collected mousse-like objects are poured into a drying container, and naturally dried by being left for 5 days in a clean room at a humidity of 20 to 50% and a temperature of 25 to 30°C. Instead of natural drying, vacuum drying or blow drying using a N₂ gas or the like may also be performed.
By repeating the ozone re-oxidation step S113 through the water-washing step S119 a predetermined number of times, the purity of silicon after being collected can be further increased.

Thus, by ozone-oxidizing silicon sludge produced through the cylindrical grinding process of a silicon block (S102), organics on the surfaces of the silicon powder are removed, and thick silicon oxide films withuniformthicknesses are formed on the surface layers of the silicon powder, and thereafter, ozone is removed by hydrogen peroxide water (S103), and then, silicon sludge is dispersed in hydrochloric acid and metal impurities adhering to the silicon powder are dissolved (S104). Thereafter, after hydrochloric acid is left to stand (S105), a supernatant containing the metal impurities are removed (106), and then, the silicon sludge is rinsed with ultrapure water (S107), and the silicon oxide films of the silicon powder are dissolved by hydrofluoric acid, and metal impurities in the surface layers are discharged into hydrofluoric acid (S108). Accordingly, the level of contamination with organics and the level of contamination with impurities on the surfaces of silicon powder are reduced, and silicon oxide films formed on the surface layers of the silicon powder can be removed and the amount of metal impurities in the surface layers can be reduced. As a result, high-purity silicon can be collected.

After the silicon collection step S111, the pure water rinsing step S112 of rinsing silicon sludge with ultrapure water in which hydrogen is mixed, the ozone re-oxidation step S113 of ozone-oxidizing silicon sludge again and forming silicon oxide films on the surface layers of the silicon powder, the ozone re-removal step S114 of removing ozone by adding hydrogen peroxide water to the ozone-oxidized silicon sludge again, and the hydrofluoric acid re-cleaning step S115 of cleaning the silicon oxide films with hydrofluoric acid again, are applied in order. Accordingly, in the surface layers of the silicon powder, metal impurities diffused to deeper portions can be removed, and higher-purity silicon can be collected.

### Industrial Applicability

The present invention is useful when collecting silicon powder from silicon sludge produced through a silicon working process of a single crystal silicon ingot and when producing a material for a silicon-based solar cell according to an electromagnetic casting method or a unidirectional solidification method from the silicon sludge. "Electromagnetic casting method" is a method for making an ingot grow continuously by heating and dissolving a silicon material by high-frequency induction and floating silicon melt.

## Claims

1. A method for cleaning silicon sludge comprising:
pouring silicon sludge including silicon powder produced through a silicon working process and a dissolved ozone solution into a container, and by ozone-oxidizing the silicon sludge by ozone in the dissolved ozone solution, removing organics on the surfaces of the silicon powder, and forming silicon oxide films on the surface layers of the silicon powder;
applying ozone removal to decompose ozone in the ozone-oxidized silicon sludge;
after the ozone removal, pouring hydrochloric acid that dissolves metal impurities adhering to the surfaces of the silicon powder into the container, and by dispersing the silicon sludge into the hydrochloric acid, cleaning the silicon sludge with hydrochloric acid;
after the hydrochloric acid cleaning, leaving the silicon sludge to stand to separate the silicon sludge dispersed in the hydrochloric acid into a supernatant and silicon sludge by sedimentation;
thereafter, removing the supernatant in which the metal impurities are dissolved from the container;
after the removal of the supernatant, by pouring ultrapure water into the container, applying ultrapure water rinsing to rinse the sedimented silicon sludge with ultrapure water; and
after the ultrapure water rinsing, bypouringhydrofluoric acid into the container, applying hydrofluoric acid cleaning to dissolve the silicon oxide films of the silicon powder with the hydrofluoric acid to discharge the metal impurities taken in the silicon oxide films into the hydrofluoric acid.

2. The method for cleaning silicon sludge according to Claim 1, comprising:
after the hydrofluoric acid cleaning, pouring ultrapure water in which hydrogen is mixed into the container, applying hydrogen water rinsing to rinse the silicon sludge with the ultrapure water in which hydrogen is mixed,
after the hydrogen water rinsing, pouring a dissolved ozone solution into the container, ozone-oxidizing the silicon sludge again to form silicon oxide films on the surface layers of the silicon powder,
thereafter, by pouring hydrogen peroxide water into the container, removing ozone in the ozone-oxidized silicon sludge again,
and next, pouring hydrofluoric acid into the container, and by cleaning the silicon oxide films of the silicon powder with hydrofluoric acid again, discharging metal impurities taken in the silicon oxide films into the hydrofluoric acid.
